# EUROPEAN PATENT SPECIFICATION

(11) **EP 1 935 177 B1**
(45) Date of publication and mention of the grant of the patent: **31.07.2013**
(21) Application number: 06825882.1
(22) Date of filing: 11.10.2006
(51) Int. Cl.: H04N 21/2365, H04N 21/25, H04N 21/4147, H04N 21/426, H04N 21/434, H04N 21/458

(54) **SYSTEMS AND METHODS FOR RECORDING MULTIPLE PROGRAMS SIMULTANEOUSLY WITH A SINGLE TUNER**
SYSTEME UND VERFAHREN ZUM GLEICHZEITIGEN AUFZEICHNEN MEHRERER PROGRAMME MIT EINEM EINZIGEN TUNER
SYSTEMES ET PROCEDES D'ENREGISTREMENT SIMULTANE DE PROGRAMMES MULTIPLES A L'AIDE D'UN SYNTONISEUR SIMPLE

(30) Priority: 14.10.2005 US 251161
(43) Date of publication of application: 25.06.2008
(73) Proprietor: United Video Properties, Inc., Santa Clara, CA 95050 (US)
(72) Inventor: CRANER, Michael L., Chester Springs, Pennsylvania 19425 (US)
(74) Representative: Hale, Peter
(86) International application number: PCT/US2006/040008
(87) International publication number: WO 2007/047410

(56) References cited:
- WO-A1-2004/091217
- US-A- 5 844 595
- US-A1- 2002 147 975
- US-A1- 2003 072 559
- US-A1- 2003 208 767
- US-B1- 6 177 931

## Description

### Background of the Invention

Recording devices, such as digital video recording (DVR) devices are well known in the art. Some DVR systems may include multiple tuners to allow the DVR system to simultaneously record more than one program at a time. However, a user can only simultaneously record as many programs as the user's DVR system has available tuners because each tuner only records one program at a time. In such systems, if the user's DVR system has two tuners and the user would like to record, for example, three NCAA tournament college basketball games that are being played at the same time, the user would be forced to choose two of the games for recording and not record the third game.

Accordingly, it would be desirable to provide digital recording systems and methods for simultaneously recording multiple programs with one tuner.

### Summary of the Invention

An interactive television application, such as an interactive program guide, receives a user's requests to record a number of programs that are transmitted to the user's equipment at the same time or during an overlapping time period. Prior to recording the programs, the interactive television application determines whether one or more of the programs requested by the user are provided in a single digital transport multiplex received by the user's equipment (such as, for example, a 256QAM cable feed carrying roughly ten programs). If the programs are provided in the same digital transport multiplex, the interactive television application records the programs simultaneously by tuning to a carrier signal modulated by the digital transport multiplex and recording the requested programs simultaneously using a single tuner.

If the requested programs are not all provided in a single digital transport multiplex, the interactive television application provides a conflict notice to the user, and prompts the user for an indication of which digital programs to record. Alternatively, the interactive television application may automatically determine which programs to record based on, for example, recording priorities of the programs.

In some embodiments the interactive television application transmits to the content source of the user's television network (e.g., a cable system headend) a request to generate a personalized digital transport multiplex. This may be done, for example, when the interactive television application determines that programs scheduled for recording are not provided in the same digital transport multiplex, or as part of efficiently managing the resources of the user's equipment to, for example, avoid conflicts. In response, the content source creates a transport multiplex having the user's requested programs, and transmits it to the user's equipment. If one or more of the programs requested by the user are analog programs, the content source may convert such programs to digital form and include them in the transport multiplex. The interactive television application tunes to the personalized digital transport multiplex generated for the user to simultaneously record the programs requested by the user using a single tuner.

In some embodiments, a content source may generate customized transport multiplexes of popular programs. For example, a plurality of users serviced by a given content source may request personalized transport multiplexes having similar programs. The content source may identify the most requested programs and transmit the identified programs in one or more digital transport multiplexes. The interactive television applications of each of the plurality of users may automatically tune to the one or more digital transport multiplexes and record the programs that each requested. Alternatively, the interactive television applications may record all of the programs in the transport multiplex and suggest unrequested programs to their users.

To record multiple programs from a single digital transport multiplex (e.g., an MPEG-2 multiple-service transport multiplex (MSTM)), in some embodiments, the interactive television application demodulates the carrier signal, demultiplexes the programs requested by the user from the transport multiplex, and records the programs as individual files on the user's digital storage device. In other embodiments, the interactive television application demodulates the carrier signal and stores the entire digital transport multiplex or a groomed version of the digital transport multiplex that includes just those programs of interest without extracting programs to individual files. Then, in response to a user's request to play back a program from the recorded digital transport multiplex, the interactive television application demultiplexes the stored multiplex and decodes the requested program. In some embodiments, the interactive television application may demultiplex programs from a previously stored complete or partial digital transport multiplex into individual files as a background task. In some embodiments, when the digital transport multiplex includes additional programs that were not indicated for recording by the user, the interactive television application may discard the additional programs.

### Brief Description of the Drawings

The above and other features of the present invention, its nature and various advantages will be more apparent upon consideration of the following detailed description, taken in conjunction with the accompanying drawings in which:

FIG. 1 is a diagram of an illustrative interactive television system in accordance with one example of the present invention;

FIG. 2 shows an illustrative display screen showing television listings in accordance with one example of the present invention;

FIG. 3 shows an illustrative display screen showing information relating to a television program in accordance with one example of the present invention;

FIG. 4 shows an illustrative display screen showing a television program in full screen after a recording has commenced in accordance with one example of the present invention;

FIG. 5 shows an illustrative display screen showing recording options in accordance with one example of the present invention;

FIG. 6 shows an illustrative display screen showing a listing of digital transport multiplexes in accordance with one example of the present invention;

FIG. 7 shows an illustrative display screen that prompts the user to select one or more digital transport multiplexes for recording in accordance with one example of the present application;

FIG. 8 shows an illustrative display screen showing a listing of recorded programs in accordance with one example of the present application;

FIG. 9 shows a flow chart of an illustrative process for simultaneously recording at least two programs using a single tuner in accordance with one example of the present invention;

FIG. 10 shows a flow chart of an illustrative process for simultaneously recording at least two programs using a single tuner in accordance with one example of the present invention;

FIG. 11 shows a flow chart of an illustrative process for generating a digital transport multiplex in accordance with one example of the present invention;

FIG. 12 shows a flow chart of an illustrative process for generating a personalized digital transport multiplex in accordance with one example of the present invention;

FIG. 13 shows a flow chart of an illustrative process for selecting programs to transmit in a personalized digital transport multiplex in accordance with one embodiment of the present invention;

FIG. 14 shows a flow chart of an illustrative process for simultaneously recording and playing back a program from a digital transport multiplex in accordance with one example of the present invention; and

FIG. 15 shows a flow chart of an illustrative process for simultaneously recording and playing back a program from a digital transport multiplex using multiple networked recording devices in accordance with one example of the present invention.

### Detailed Description

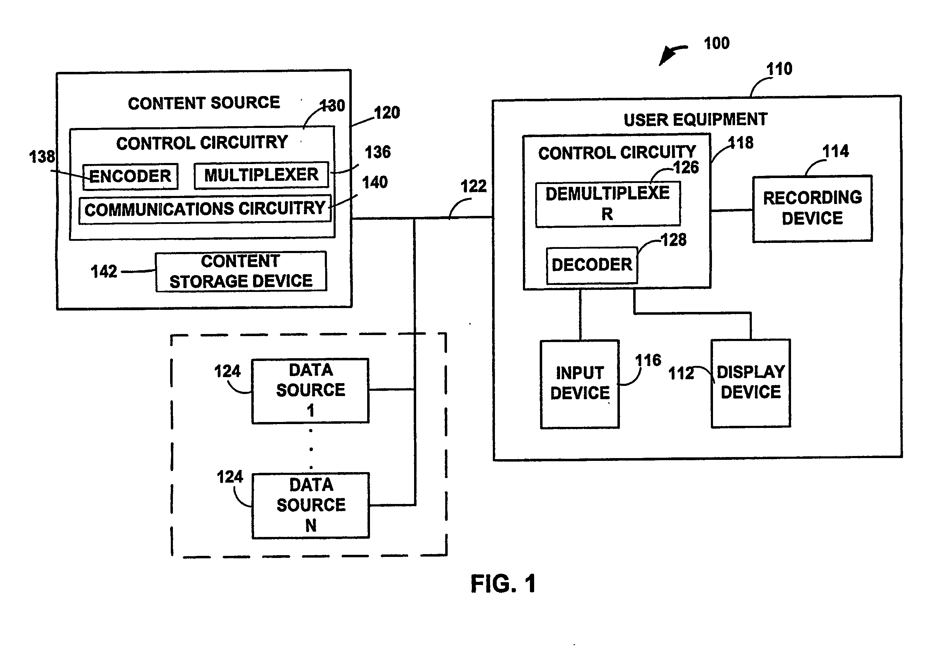

FIG. 1 shows illustrative interactive television system 100 in accordance with one example of the invention. User equipment 110 receives content in the form of signals from content source 120 over communications path 122. In practice there may be multiple content sources 120 and user equipment 110, but only one of each has been shown in FIG. 1 to avoid over-complicating the drawing.

Content source 120 may be any suitable content source such as, for example, a cable system headend, satellite television distribution facility, television broadcast facility, on-demand server (e.g., VOD server), Internet video/IP server, or any other suitable facility or system for originating or distributing content. Content source 120 is configured to transmit signals over any suitable communications path 122 including, for example, a satellite path, a fiber-optic path, a cable path, or any other suitable wired or wireless path for distributing content. The signals may carry any suitable content such as, for example, television programs, music, news, web services, or any other suitable content.

Content source 120 includes control circuitry 130 for generating digital transport multiplexes of content from content storage device 142 for distribution to user equipment 110 over communications path 122. Control circuitry 130 includes multiplexer 136 and encoder 138 to create digital transport multiplexes of programs. In some embodiments, control circuitry 130 includes communications circuitry 140 for transmitting digital transport multiplexes or digital transport streams, for example 256QAM transport multiplexes, to user equipment 110 and receiving requests for personalized transport multiplexes from user equipment 110.

Control circuitry 130 may use any suitable criteria or algorithm for selecting which digital programs to transmit in a transport multiplex. For example, control circuitry 130 may transmit each program in its own digital transport multiplexes. As another example, control circuitry 130 may combine programs having different bandwidths into a single digital multiplex to maximize the use of the available bandwidth (e.g., a high-definition sports program and a relatively low bandwidth news program may be transmitted in the same digital transport multiplex). Other suitable criteria for selecting programs to combine in a digital transport multiplex may include, for example, how often programs have been viewed or recorded, what channels programs are associated with, genres or themes of programs, or any other suitable criteria. In some examples, programs are combined in digital transport multiplexes according to user's requirements for concurrently recording them.

Content storage device 142 may include any suitable component for storing content such as, for example, hard drive arrays, DVD recorder/players, tape record/players, servers, or any other component. Control circuitry 130 of content source 120 may direct content storage device 142 to store specific content as it originates in or is received by content source 120. Content source 120 uses the content stored by content storage device 142 for digital transport multiplexes transmitted to the user.

User equipment 110 may include any equipment suitable for providing an interactive television experience. User equipment 110 may include a consumer video appliance, which includes, for example, digital set-top boxes, televisions, and personal computer based televisions (PCTVs). Such devices may or may not integrate video recording and/or display components. User equipment 110 may include television equipment such as a television, set-top box, recording device, video player, user input device (e.g., remote control, keyboard, mouse, touch pad, touch screen, or voice recognition interface) or any other device suitable for providing an interactive television experience. For example, user equipment 110 may include a DCT 2000, 2500, 5100, 6208 or 6412 set-top box provided by Motorola, Inc.

In the example of FIG. 1, user equipment 110 includes at least control circuitry 118, display device 112, recording device 114, and user input device 116, which may be implemented as separate devices or as a single device. An interactive television application, such as an interactive television program guide, is implemented on user equipment 110 to display, on display device 112, the content transmitted by content source 120 over path 122 and to provide interactive television application features. In some embodiments, multiple instances of user equipment 110 communicate over an in-home network (e.g., a multimedia-over-coax (MOCA) network) and share tuners and/or other resources.

Recording device 114 may be a personal video recorder (PVR), digital video recorder (DVR), DVD-recorder, or any other suitable digital video recorder. Recording device 114 may include one or more tuners. In some embodiments, recording device 114 and control circuitry 118 communicate over an in-home network (e.g., an Ethernet network). In some examples, user equipment 110 may include multiple instances of recording device 114 networked together and connected to control circuitry 118.

Display device 112 may be any suitable device such as, for example, a television monitor or a computer monitor. Display device 112 may also be configured to provide for the output of audio.

Control circuitry 118 is configured to execute the instructions of the interactive television application. Control circuitry 118 may include one or more tuners (e.g., analog or digital tuners), encoders and decoders (e.g., decoder 128), processors (e.g., MIPs family processors), memory (e.g., RAM and hard disks), communications circuitry (e.g., cable modem circuitry), input/output circuitry (e.g., IR receiver, graphics circuitry, display adapter, or NTSC encoder circuitry), connections to the various devices of user equipment 110, and any other suitable component for providing analog or digital television programming, program recording, and interactive television features. Control circuitry 118 may include demultiplexer 126 and decoder 128 to demultiplex and decode digital transport multiplexes received from content source 120 over communications path 122 or retrieved from recording device 114. In some examples, control circuitry 118 may be included as part of one of the other devices of user equipment 110 such as, for example, part of recording device 114, display 112, or any other device (e.g., a set-top box, television, or video player).

User equipment 110 may receive interactive television application data from one or more data sources 124. Data sources 124 may provide data for a particular type of content or for a particular application. For example, one data source 124 may provide data for non-on-demand assets (e.g., non-pay and pay-per-view television programs) and another may provide data for on-demand assets (e.g., VOD programs). Or, for example, a single data source may provide both of these types of data. In some examples, one data source 124 may provide data for an interactive television program guide, and another may provide data for another interactive television application running on user equipment 110 (e.g., a home shopping application). In some embodiments, data sources 124 may provide data to the interactive television application using a client/server approach. There may be one server per data source, one for all sources or, in some embodiments, a single server may communicate as a proxy between user equipment 110 and various data sources 124.

Content source 120 and data sources 124 are shown in FIG. 1 as separate elements. In practice, their functionality may be combined and provided from a single system at a single facility, or multiple systems at multiple facilities. For example, one content source 120 and data source 124 may be combined to provide VOD content and associated VOD data, and another content source 120 and data source 124 may be combined to provide broadcast video service content and associated data.

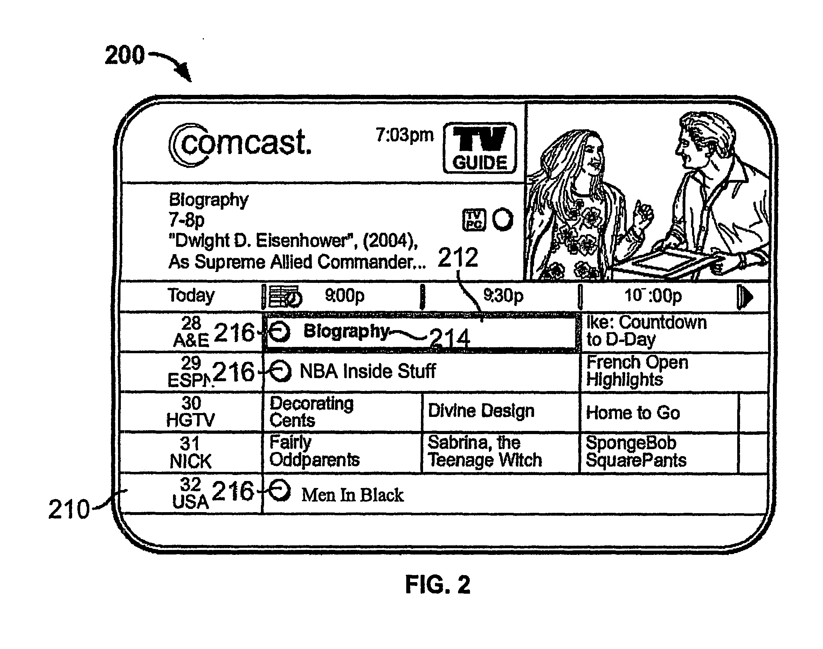

FIG. 2 shows illustrative program guide screen 200 that may be displayed by the interactive television application on display 112. The user may access program guide screen 200 by any suitable means such as, for example, pressing a "menu," "guide," or other suitable key or key sequence on user input device 116, navigating from another program guide screen or menu, or by any other suitable means. Illustrative program guide screen 200 contains a grid of program listings 210, which includes program titles, channels, scheduled broadcast times. The screen may include any other suitable program information. In other embodiments, screen 200 may include a list (e.g., a single column) of programs. The user may select a desired program listing with highlight region 212 using user input 116, or any other suitable means.

To schedule the recording of a program or other suitable video, a user may highlight a desired program, as shown in FIG. 2 where "Biography" on channel 128 is highlighted, and press a "Record" key or key sequence, or select a "Record" option from the screen using user input device 116. In response to receiving an instruction to record the program, the interactive television application may place icon 216 on the listing corresponding to the selected program to indicate to the user that the interactive television application has scheduled the program for recording. In some embodiments, the interactive television application may use any suitable means for identifying programs as selected for recording. In the example of FIG. 2, icon 216 is placed by the listings for "Biography," "Inside Stuff" and "Men In Black" to indicate that those programs are scheduled for recording.

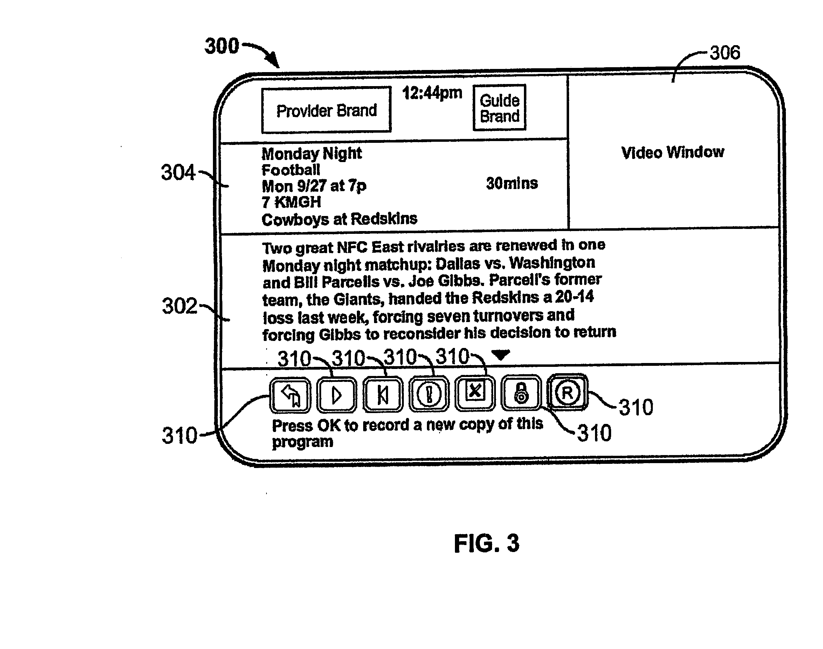

Prior to choosing to record a program, the user may request additional information regarding the program. For example, the user may highlight a listing using highlight region 212 and press an "Information" key or key sequence on user input device 116. In response to receiving the user request, the interactive television application may display an information screen. FIG. 3 shows illustrative information screen 300, which includes detailed information section 302, program description area 304 (including the program title, time and channel), and video window 306. Screen 300 also includes selectable control icons 310. The screen may include options for recording, series recording, parental lock, or any other suitable interactive television application action. If a user determines that he wants to record the program, the user may schedule the recording by pressing a "Record" key or key sequence, selecting a "Record" icon from the screen using user input device 116 (as indicated in FIG. 3), or by any other suitable means.

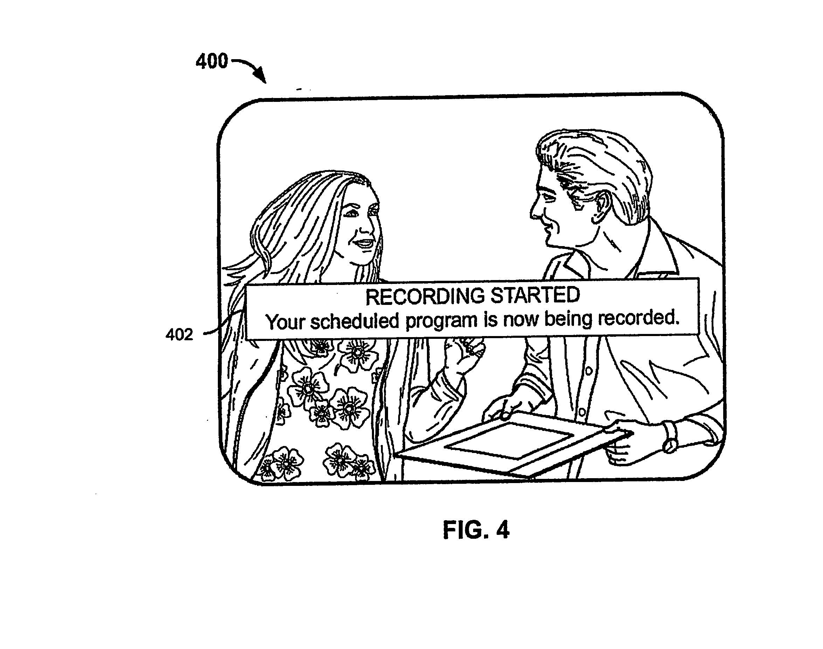

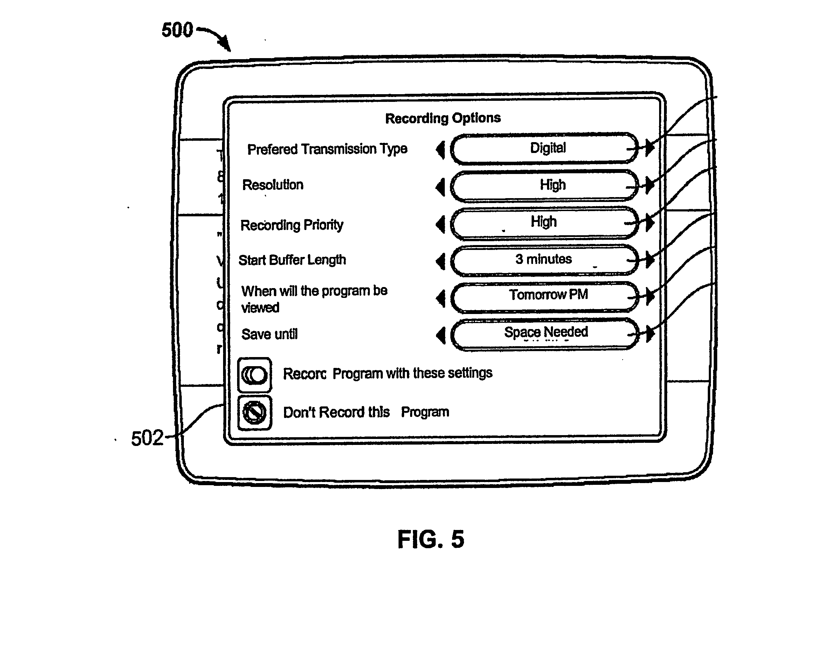

In some embodiments, the user may be watching a program on display device 120 in a full screen view, for example full screen view 400 shown in FIG. 4, and decide to record the program. To record the program, the user may press a "Record" key or key sequence on user input device 116, or use any other suitable means. A pop-up notice, such as pop-up notice 402, may appear to confirm that recording has begun. Such a notice may also appear in response to receiving a user confirmation to record the program (e.g., in response to a user confirming the recording with menu 502 of FIG. 5). In some examples, pop-up notice 402 may appear automatically when a previously-scheduled recording commences.

In some examples, the interactive television application may prompt the user to set recording options for the program. For example, the interactive television application may display a screen or pop-up, such as recording options screen 500 shown in FIG. 5. Recording options screen 500 includes pop-up menu 502, which includes a plurality of recording options 504. Recording options 504 include the transmission type, resolution, recording priority, start buffer length, when the user intends on viewing the program, and how long to save the copy. The transmission type option may be useful, for example, for maximizing the number of programs that can be concurrently recorded, given that analog programs require a tuner per program. In some embodiments, the recording options pop-up menu may include any other suitable recording option (e.g., end buffer length, how many copies to record, which channel to record, which device of multiple networked DVRs to use for recording, or which recordings to keep given a limit in disk space or tuner resources). In some embodiments, the interactive television application may automatically set or recommend recording options for the selected program and other programs previously selected for recording to facilitate simultaneously recording multiple programs (e.g., limiting the quality of multiple selected digital programs to fit the programs in a single digital transport multiplex).

When the transmission time of a first program scheduled for recording approaches (or sooner, such as when a program is first scheduled for recording, the interactive television application may determine whether additional programs are scheduled for recording during the transmission time of the first program. It shall be noted that here and throughout, programs recorded at the same time include programs that overlap in any part of their broadcast time.

In response to determining that multiple programs are scheduled for recording at the overlapping times, the interactive television application (in some embodiments) determines whether user equipment 110 has enough tuners available to tune to and record each of the programs using one tuner per program. For example, the interactive television application may compare the number of available tuners with the number of programs simultaneously scheduled for recording. In response to determining that user equipment 110 (FIG. 1) has enough tuners available to record each program separately, the interactive television application records all of the selected programs on recording device 114 (FIG. 1) using the available tuners.

In some examples, this step may be skipped as the interactive television application may instead attempt to manage the number of tuners being used for simultaneous recording by recording multiple programs simultaneously with one tuner in the manner described below. If user equipment 110 does not have enough tuners available, the interactive television application then determines whether some or all of the programs selected for recording are digital programs. The interactive television application may review the program guide information associated with the selected programs provided by data source 124 to make this determination. Note that in current video entertainment systems (e.g., cable systems) transmission of a video program in analog format requires the full channel bandwidth (6 MHz in cable systems in the United States) while transmission of a video program in digital format requires only a fraction (e.g., one tenth assuming 256QAM modulation) of the full channel bandwidth.

In response to determining that all of the programs selected for recording are digital programs, the interactive television application identifies the digital transport multiplex or streams provided by content source 120 that carry the programs. The interactive television application then determines whether some or all of the programs selected for recording are in a single digital transport multiplex. If all of the programs are in a single digital transport multiplex (which may occur coincidentally or which may be planned by the system architect in anticipation of, for example, related programs being desirable to record simultaneously) the interactive television application tunes to the digital transport multiplex at the appropriate time and instructs recording device 114 to simultaneously record the selected programs. By recording programs from the digital transport multiplex, only one tuner is needed to record multiple programs simultaneously.

If the interactive television application determines that the selected programs are in a plurality of digital transport multiplexes, or if there are one or more analog programs scheduled for recording, the interactive television application may determine whether user equipment 110 has enough tuners available to tune to all of the digital transport multiplexes and analog channels simultaneously. In response to determining that user equipment 110 has enough tuners, the interactive television application may tune to the plurality of digital transport multiplexes associated with the selected programs, and each analog program, using the available tuners to simultaneously record one or more programs using each available tuner. Programs for a given transport multiplex are simultaneously recorded using a single tuner. If instead the interactive television application determines that user equipment 110 does not have enough tuners available, the interactive television application may automatically determine which multiplex or multiplexes and analog channels to record from. For example, the interactive television application may select the multiplexes having the highest number of programs set with high recording priorities, the multiplexes having the highest number of selected programs, the multiplexes having the most content (e.g., most total minutes of programming), or any other suitable multiplex. As another example, the interactive television application may consider analog channels as having the highest priority.

The following example will serve to illustrate the case where the multiplexes having the highest number of selected programs are given higher recording priorities. For example, programs U, V, W, X, Y, and Z are scheduled for recording at the same time. The content source may include U and V in a first digital transport multiplex, W, X, and Y in a second digital transport multiplex, and Z in a third digital transport multiplex, each digital transport multiplex being distinct from the others. The interactive television application may assign a relative priority to each of the three digital transport multiplex based on the number of selected programs included in each digital transport multiplex. For example, the interactive television application may assign the first digital transport multiplex (including U and V) a relative priority of 2, the second digital transport multiplex (having W, X, and Y) a relative priority of 3, and the third digital transport multiplex (having Z) a relative priority of 1. In this example, the interactive television application instructs a DVR to tune to the second digital transport multiplex and record program W, X, and Y with a first available tuner. If the DVR has a second tuner available, the interactive television application instructs the DVR to tune to the first digital transport multiplex and record programs U and V.

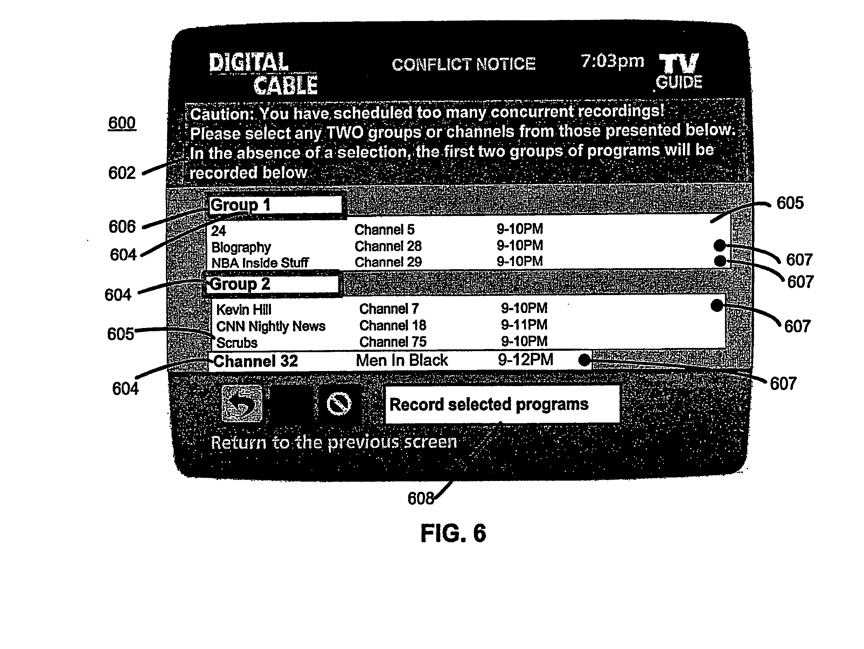

In some examples, when the interactive television application cannot tune to all of the digital transport multiplexes or channels simultaneously, it may display a conflict notice to prompt the user to, for example, select one or more digital transport multiplexes or channels. An illustrative conflict notice 600 is shown in FIG. 6. Notice 600 includes description section 602 indicating to the user that there are too many simultaneous recordings scheduled. Description section 602 also indicates to the user that only two listings may be selected for recording (e.g., because the user's equipment only has two available tuners). Notice 600 also includes a listing 604 for each transport multiplex having programs scheduled for recording. Each listing 604 associated with a digital transport multiplex includes an indication of the programs inserted in the digital transport multiplex (e.g., list 605). If a transport multiplex has only one program selected for recording, or if an analog program is selected for recording, then that multiplex or program may be identified by the program itself (as indicated by "Men In Black"). Listings 604 may include an indication (e.g., icon 607) of which of the programs of the listings 604 were selected for recording. In some embodiments, only the programs selected for recording will be shown on this screen. Notice 600 also includes highlighted region 606 for selecting listings 604. The user may use highlighted region 606 to select as many listings 604 as the user's equipment has tuners available for recording (e.g., indicated in description section 602). After selecting one or more listings, the user may select recording icon 608 to record, or schedule for recording, the multiplex or streams and analog programs associated with the selected listings. In the example of FIG. 6, notice 600 also indicates a default action (i.e., that the interactive application will, by default, tune to the digital transport multiplexes indicated by the top two listings ("Group 1" and "Group 2")and record the programs transmitted in the multiplexes).

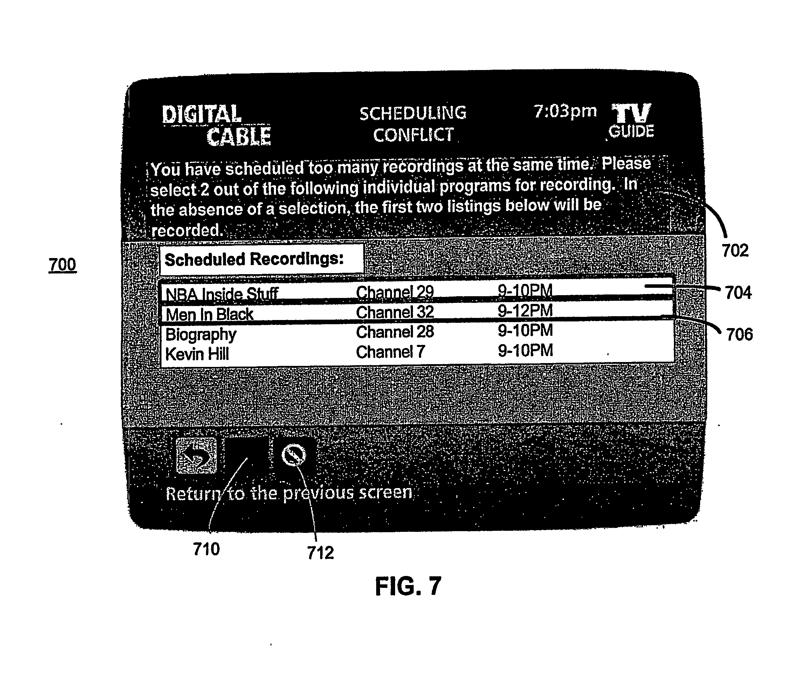

FIG. 7 shows an illustrative notice 700 that the interactive television application may display when all of the overlapping recordings are in different transport multiplexes (or on different analog channels). Notice 700 includes detailed information section 702 that indicates to the user that user equipment 110 does not have enough tuners available to simultaneously record all of the requested programs listed in section 704 (e.g., the user's equipment only has two available tuners, but the user selected four programs for recording at the same time). Detailed information section 702 may also indicate the default action taken in the absence of a user instruction.

The order of the programs in listings section 704 may be arbitrary or may be based on recording options of the listed programs. For example, the programs of listing section 704 are listed in order of decreasing recording priority. In this example, "Biography," as the last of the listed programs, has the lowest recording priority of the three programs. The user may select a program from listing section 704 using highlight region 706 and, for example, confirm that the selected program should be recorded (e.g., by selecting recording icon 710) or cancel the recording (e.g., by selecting cancel icon 712).

Instead of prompting the user to resolve a conflict, the interactive television application will, in some embodiments, send a request for a personalized digital transport multiplex to content source 120 (FIG. 1). Returning to the example shown FIG. 1, content source 120 has communications circuitry for receiving such requests from the interactive television applications of its subscribers (i.e., users of different user equipment 110s). In response to a request for a personalized multiplex, control circuitry 130 (FIG. 1) retrieves content from local storage (e.g., content storage device 142) or from one or more feeds that content source 120 distributes on behalf of program providers, optionally encodes the content with encoder 138 if it is not already in digital format, multiplexes it using multiplexer 136, and transmits the personalized multiplex over communications path 122 to user equipment 110.

Control circuitry 130 may use any suitable encoding and multiplexing techniques. For example, encoder 138 may encode content using, for example, Intel Indeo, Cinepak, QuickTime, MPEG-1, MPEG-2, MPEG-3, MPEG-4, or any other suitable algorithm for encoding a digital program. Multiplexer 136 may use any suitable multiplexing approach including, for example, statistical multiplexing, time-division multiplexing (TDM), frequency division multiplexing (FDM), and/or wavelength-division multiplexing (WDM). The digital transport multiplex may be modulated with any appropriate modulation scheme, including quadrature amplitude multiplexing (QAM), quadrature-phase shift key (QPSK), Vestigial side band (VSB), or any other suitable modulation scheme.

The following example will serve to illustrate this feature. A user schedules the Monday, May 116 transmissions of "Biography" on channel 128, "NBA Inside Stuff" on channel 29 and "Men In Black" on channel 32 for recording. The transmission of each of the selected programs begins at 9 PM. The interactive television application determines that all three requested programs are digital programs in separate transport multiplexes, and that the user's equipment does not have enough tuners to record programs from all the transport multiplexes at once (e.g., the user's equipment has only two available tuners). In response to the determination, the interactive television application sends a request to content source 120 requesting that the three programs be transmitted in a single digital transport multiplex. Shortly prior to 9 PM on Monday, May 116, control circuitry 130 of content source 120 encodes all three requested programs in MPEG-4 format using encoder 138, multiplexes them together into a single digital transport multiplex using multiplexer 136, and transmits the encoded programs in a digital transport multiplex by QAM modulation using communications circuitry 140. Content source 120 may also send a notice to user equipment 110 indicating that the interactive television application should tune to the generated personalized digital transport multiplex and not the individual transport multiplexes for channels 128, 29 and 32 to record the selected programs.

The interactive television application may send a request to generate a personalized digital transport multiplex to content source 130 at any time prior to the transmission time of the programs selected for recording. For example, when the transmission time of a program selected for recording approaches, or any time the user selects a program for recording.

In some examples, the interactive television application may forego the step of determining whether programs selected for recording overlap and automatically request a personalized digital transport multiplex for every program selected for recording. Then if the user, while recording the personalized digital transport multiplex having the selected program decides to record a second program, the interactive television application may send a request to content source 120 that the second program be added to the personalized digital transport multiplex. The interactive television application may then record both selected programs with one tuner by recording the personalized digital transport multiplex. The user may thus spontaneously record an additional program without requiring an additional tuner.

In yet other embodiments, the interactive television application may request personalized digital transport multiplexes any time multiple programs are scheduled for simultaneous recording, regardless of whether or not the user's equipment has sufficient resources to separately record each program. This may be done to attempt to efficiently manage the resources of the user's equipment by scheduling the use of the least number of tuners at a given time. This may be part of, for example, a conflict avoidance algorithm of the interactive television application. In practice any of the foregoing approaches may be used in any suitable combination.

Control circuitry 130 of content source 120 (FIG. 1), in some embodiments, examines the requests for personalized transport multiplexes from interactive television applications of the plurality of users to determine whether there is any commonality in the requests. If control circuitry 130 identifies common programs selected by the plurality of users for recording, control circuitry 130 generates and broadcasts or multicasts a transport multiplex of the common programs for distribution to all of the users who requested a program in the multiplex.

Over time, control circuitry 130 may track the most requested programs and dynamically group those programs into common digital transport multiplexes. These "popular multiplexes" may be broadcast, multicast or unicast to subscribers. This may decrease the number of personalized multiplexes that content source 120 needs to generate (thus increasing plant bandwidth utilization efficiency), and may be used by the interactive television application for promotional opportunities. For example, data from data source 124 may indicate the "channel" that a popular multiplex is on, and the programs that are in the multiplex. The interactive television application may include a "hot picks" feature that informs the user of the programs, and the user may select one or more of the programs for recording. Alternatively, the interactive television application may automatically record the programs of the popular multiplex. When the user accesses his or her recordings list, the interactive television application may provide an alert indicating that the programs of the popular multiplex were recorded and are now available for viewing.

In still another approach, control circuitry 130 may track the most requested programs and organize its regular transport multiplexes (i.e., those generated as part of its regular content distribution process) to make it more likely that users will be able to record programs simultaneously using a single or limited number of tuners. In other approaches, the system may insert programs into the multiplex that were not among the initially requested programs. For example, a program that is scheduled for later recording but is available in an earlier broadcast or is available from an on-demand server may be inserted into the multiplex and recorded at the same time. In another example, one or more unrequested programs (e.g., commercials or program promotions) may be inserted into the multiplex and recorded for later promotional playback.

The "virtual tune" capability of using a single transport multiplex to simultaneously record multiple programs may come with a cost to content source 120 in terms of equipment that is fielded to support personalized multiplexes for each user. Thus in some embodiments, the number of personalized multiplexes supported by a user's equipment 110 is a function of one or more of the number of physical tuners a user has, the tier level of the user, the bandwidth available in content source 120, or dynamically a function of anticipated multiplex usage associated with the period during which a user's recordings are scheduled (e.g., primetime).

Content source 130 may dynamically schedule personalized digital transport multiplexes over time such that overlapping program requests are available to the requesting interactive television application or applications in the fewest number of independent multiplexes. Based on the various inputs and its ability to combine programs into multiplexes, content source 120 acknowledges or denies one or more of the requests.

Occasionally, user equipment 110, content source 120, or both, may determine that user equipment 110 cannot record multiple programs selected for recording at the scheduled transmission time. This determination may be based on, for example, the availability or limitations of user equipment 110 (e.g., not enough bandwidth available, not enough space to record the programs transmitted in the digital transport multiplex). In response to the determination, content source 120 may time shift the programs. For example, content source 120 may record the scheduled programs on content source 120 and transmit them to user equipment 110 in a personalized transport multiplex at a later time or at an earlier time (e.g., if the program is stored on a server (e.g., content storage device 142) and available to content source 120).

In some examples, instead of or in addition to time shifting, content source 120 may rate shift programs when user equipment 110 does not have enough bandwidth available to record all of the scheduled programs concurrently. Content source 120 may create a digital transport multiplex combining all of the selected programs at rates proportionally reduced to fit in the bandwidth available to user equipment 110. For example, if the user selects three digital programs for recording but only has the bandwidth necessary for recording one program in real time, the content source may provide the user equipment with a digital transport multiplex having all three programs streamed at one third the real-time rate. In this example, the recording time would be three times longer than that required for recording a single digital program in real-time.

The following example will serve to illustrate time shifting and rate shifting. Consider a population of single-tuner set-tops X, Y, and Z, where X and Y both request to concurrently record programs A and B at some future time T. To accommodate set-tops X and Y, control circuitry 130 determines it will multiplex A and B into a common multiplex M1 at time T and it sends an "okay to record" message back to set-tops X and Y along with potentially updated virtual channel identifiers for the two programs and an identification, if necessary of the multiplex M1. But suppose set-top Z requests to record program C and D, also at time T and control circuitry 130 determines that C could be added to multiplex M1 at that time but that C and D together would exceed the residual bandwidth of multiplex M1. In this case, control circuitry 130 may (a) deny the request of set-top Z, (b) limit the response to allowing just one of C and D, (c) allocate a separate multiplex that will carry C and D and make this available to Z, (d) timeshift either or both of programs C and D to a less busy time, or (e) multiplex C and D at half rate and take twice as long to transmit the programs (but transmit the programs concurrently). Option (e) would also afford set-top Z the opportunity to record programs A and B, and set-tops X and Y the opportunity to record programs C and D, if they so desired. The interactive television applications of each set-top may provide a notice to their respective users of the option to record the additional programs. Note that, in such a system, where the allocation of channel to multiplexes is dynamic, the interactive television application will also dynamically update its channel map tables. Also note that the delivery mechanism of the multiplex need not be through the physical tuner. If, for example, an IP interface exists, then the multiplex may be delivered through that interface additionally or alternatively.

In some, examples, the user's equipment may include multiple networked recording devices (e.g., networked DVRs) and a plurality of users may direct the interactive television application to record programs with the different recording devices. Alternatively, multiple instances of users' equipment each having a recording device may be networked, and a plurality of users may direct the interactive television applications of each user's equipment to record programs. The interactive television application or applications may determine which programs or digital transport multiplexes to record with each recording device using any suitable criteria such as, for example, maximizing the number of programs recorded, maximizing the number of high priority programs recorded, or any other suitable criteria.

In some examples, the networked recording devices or users' equipment may be connected in a master-slave relationship. A master recording device or user's equipment may receive all of the recording requests, and instruct each slave recording device to record some of the requested programs based on any suitable criteria. In some embodiments, the networked recording devices or users' equipment may be connected in a peer-to-peer (P2P) relationship. The interactive television application may determine, or the applications may communicate amongst themselves to determine, which programs to record with each of the recording devices. This may be based on any suitable criteria including, for example, the number of tuners of each recording device, the space available at each recording device, which programs were requested for recording with each recording device, or any other suitable criteria.

Once the programs have been recorded, the interactive television application may transfer each recorded program to the recording device from which the user or users instructed the interactive television application to record the program. In some embodiments, the user may play back a program over the communications network without transferring the program from the recording device with which it was recorded. The following example will serve to illustrate the networked recording device feature.

For example, assume a home includes two networked DVR units, each having a single tuner. A first user (e.g., Mom) schedules programs A and B for recording on the first unit. A second user (e.g., Child) schedules programs C and D for recording on the second unit, where A, B, C, and D are transmitted at the same time. In addition, programs A and C are transmitted in the same digital transport multiplex, and programs B and D are each transmitted in distinct digital transport multiplexes, and no personalized digital transport multiplexes are available. If the DVR units are not networked, each DVR could record at most one digital transport multiplex (so the first unit could record either A or B, and the second unit could record either C or D). If instead the DVR units are networked, the interactive television application or applications may share the resources of the DVR units to record, in the above example, more than two programs. The interactive television application or applications may identify the following combinations of programs for recording by the two DVR units:
(a) record programs A, C, and B, ignore D,
(b) record programs A, C, and D, ignore B,
(c) record programs B and D, ignore A and C.
If option (a) is selected, the interactive television application or applications direct the tuner of one DVR to tune the digital transport multiplex that includes A and C and direct the tuner of the other DVR to tune to the digital transport multiplex that includes B. If option (b) is selected, the interactive television application or applications direct the tuner of one DVR to tune to the digital transport multiplex that includes A and C and direct the tuner of the other DVR to tune to the digital transport multiplex that includes D. If option (c) is selected, the interactive television application or applications direct the tuner of one DVR to tune to the digital transport multiplex that includes B and direct the tuner of the other DVR to tune to the digital transport multiplex that includes D. In some embodiments, the interactive television application may select a combination of programs based on a user input (from either or both users) or automatically.

In some examples, the interactive television application or applications may determine whether each of the networked recording devices has enough resources to record programs. For example, a first recording device may only have enough space to record one program, while a second recording device may have enough space to record more than that. The interactive television application or applications may then determine which programs to record with each recording device based on the available space (e.g., record a single program with the first recording device and multiple programs with the second recording device). In some examples, the interactive television application or applications may record multiple programs with a recording device having limited space, and transfer the recorded programs over the network to a recording device having sufficient space.

The interactive television application may record multiple programs from a digital transport multiplex simultaneously on recording device 114 (FIG. 1) using any suitable approach. In some embodiments, the interactive television application demodulates the carrier signal, demultiplexes and decodes the programs requested by the user, and records the programs as individual files on recording device 114. In other embodiments, the interactive television application demodulates the carrier signal and stores the digital transport multiplex without extracting programs, or stores a groomed version of the multiplex (e.g., if not all of the programs in the multiplex are selected for record, the packets associated with the non-selected program are groomed from the multiplex and discarded prior to storage). Then, in response to a user's request to play back a program from the recorded digital transport multiplex, the interactive television application demultiplexes the stored multiplex and decodes the requested program. In some embodiments, the interactive television application may demultiplex and decode the programs from the recorded digital transport multiplex as a background task.

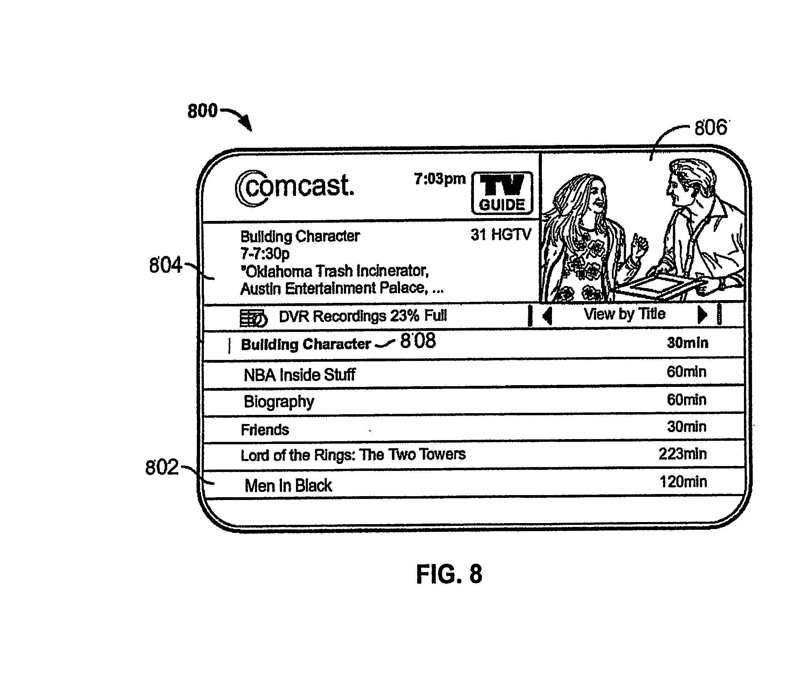

The interactive television application may provide to the user a list of the programs recorded from the digital transport multiplexes. An illustrative recordings list 800 is shown in FIG. 8. The user may access the recordings list of FIG. 8 by, for example, pressing a "Recorded Programs" key or other key sequence on input device 116 (FIG. 1), navigating from another interactive television application screen (e.g., selecting a "Recorded Programs List" icon from an interactive television application screen using user input device 116), or by any other suitable means. Display 800 includes recorded programs listings 802, detailed information section 804 and video window 806. Listing 802 includes program length, program title, channel number. Each listing may include any other suitable information. The listings may include listings for programs extracted from digital transport multiplexes as individual files, listings for programs not yet extracted from digital transport multiplexes (e.g., when digital transport multiplexes are recorded in their transmitted form), or both.

To play back a recorded program, the user may select the listing corresponding to the program from listings 802. In embodiments in which control circuitry 118 records programs as separate files, the interactive television application may direct recording device 114 (FIG. 1) to play back the selected file in response to receiving a user request for display on display device 112.

In examples in which the digital transport multiplex is recorded as a multiplex, control circuitry 118 demultiplexes and decodes a program from the digital transport multiplex upon selection of the program for playback. For example, demultiplexer 126 (FIG. 1) may extract the requested digital program transmitted in the digital transport multiplex recorded by user equipment 110, and decoder 128 may decode the extracted program. Playback of the program may begin while the program is being extracted and decoded. Alternatively, the interactive television application may notify the user that playback will begin once the requested program is sufficiently extracted and decoded from the digital transport multiplex. In some embodiments, control circuitry 118 may automatically (e.g., not in response to a user selection of a program) extract programs transmitted in a recorded digital transport multiplex as a background task so that they are available in a demultiplexed format.

In some examples, the manner in which the content is stored is hidden from the user. The user is instead presented with a consistent and clear access paradigm that does not include details of the storage or multiplex organization. In some embodiments, the interactive television application may display recorded programs that were in the same digital transport multiplex together for any suitable reason including, for example, marketing reasons. For example, if a broadcast channel offered a marketing feature to simultaneously record multiple programs, the interactive television application may display the multiple programs as a "bundle" that preserves that nature of the original offer or promotion.

In some embodiments, in response to a playback request, control circuitry 118 may extract and decode from the digital transport multiplex only the program requested by the user. The multiplex may remain stored until the interactive television application receives a user request to play back the other programs. In some examples, in response to a request to play back a program transmitted in a digital transport multiplex, control circuitry 118 may extract all of the programs transmitted in a digital transport multiplex, decode and play back the requested program, and store the other programs in separate files for later playback.

In some examples, the user may be allowed to request that a recorded program be deleted. In the case that the program was recorded as an individual file, or extracted into an individual file, the specified file may be deleted based on the user request. If the program is part of a recorded digital transport multiplex that also includes other programs that are not to be deleted, the multiplex may be further "groomed" to remove the selected program. Alternatively, the full multiplex may be retained, and an indication may be stored to prevent future access to the selected program within the multiplex (e.g., it may no longer be listed on screen 800).

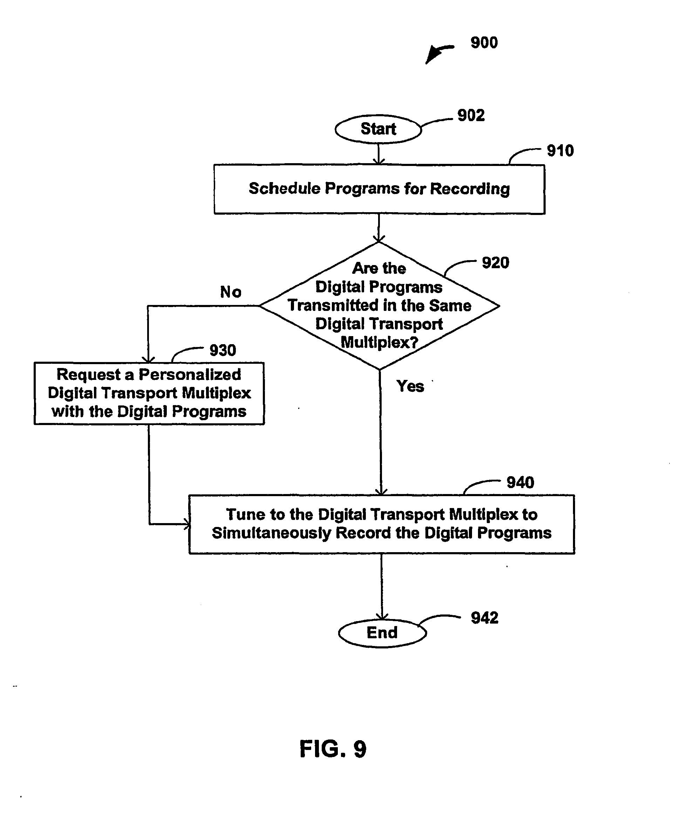

The following flow charts serve to illustrate methods involved in some examples of this invention. FIG. 9 is a flow chart of an illustrative process for simultaneously recording at least two digital programs using a single tuner. Process 900 begins at step 902. At step 910, the interactive television application schedules programs for recording. For example, the interactive television application receives a user's indications to record programs from user input device 116 (FIG. 1), or the interactive television application may automatically select a program and schedule it for recording. At step 920, the interactive television application determines whether the digital programs scheduled for recording are transmitted in the same digital transport multiplex, such as by examining the channel lineup data received from database 124 (FIG. 1).

If the interactive television application determines that the digital programs are not in the same digital transport multiplex, process 900 moves to step 930. At step 930, the interactive television application requests a personalized digital transport multiplex from the content source. For example, the interactive television application may request that control circuitry 130 of content source 120 transmit the digital programs in a personalized digital transport multiplex generated for the user. Process 900 then moves to step 940.

If the interactive television application determines that the digital programs are transmitted in the same digital transport multiplex, process 900 moves to step 940. At step 940, the interactive television application tunes to the digital transport multiplex and simultaneously records the digital programs using a single tuner. Alternatively, the interactive television application tunes to the personalized digital transport multiplex provided by content source 130 (i.e., generated in response to the request sent at step 930). Process 900 ends at step 932.

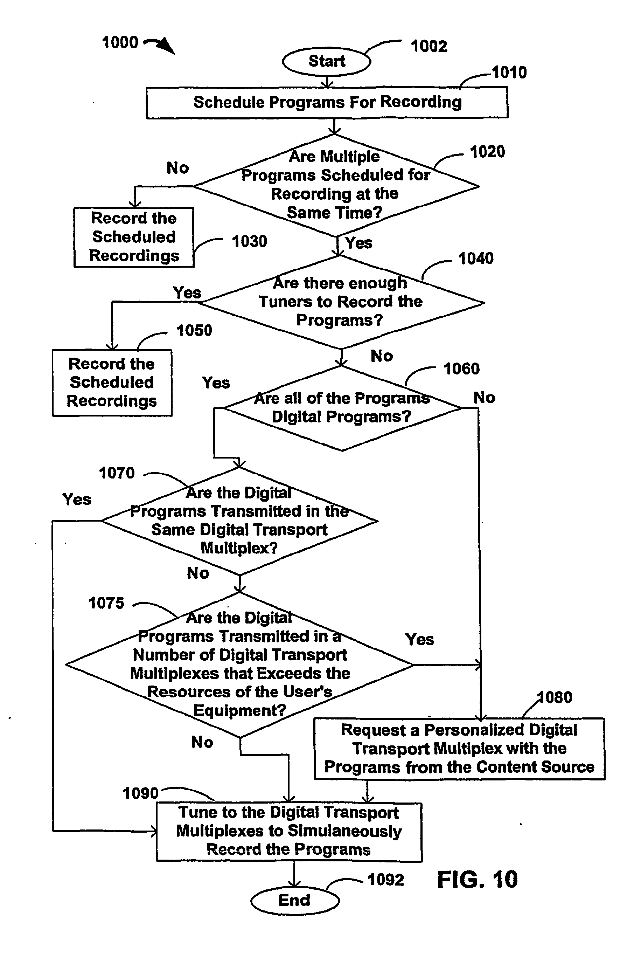

FIG. 10 is a flow chart of an illustrative process for simultaneously recording at least two programs with one tuner. Process 1000 may be used, for example, when some of the programs requested by the user are not digital programs. Process 1000 begins at step 1002. At step 1010, the interactive television application schedules multiple programs for recording. For example, the user may instruct the interactive television application to record a selected program using user input device 116, or the interactive television application may automatically select a program and schedule it for recording. At step 1020, the interactive television application determines whether programs are scheduled for recording at the same time. The interactive television application may search for overlaps at any time up to the transmission times of the programs. If the interactive television program determines that a program selected for recording does not overlap with any other programs, it records the scheduled recordings (step 1030) on recording device 114.

If instead the interactive television application determines that programs selected for recording overlap, process 1000 moves to step 1040. At step 1040, the interactive television application determines whether user equipment 110 (FIG. 1) has enough tuners available to record each of the selected programs. If the interactive television application determines that the user's equipment has enough tuners available, process 1000 moves to step 1050. At step 1050, the interactive television application records the scheduled recordings on recording device 114 (FIG. 1). For example, the interactive television application directs the tuners of recording device 114 to tune to each of the programs requested by the user.

If the interactive television application determines that the user equipment does not have enough tuners available, process 1000 moves to step 1060. At step 1060, the interactive television application determines whether all of the programs selected for recording are digital programs. For example, the interactive television application may review the program guide data, provided by data source 124, associated with the programs to identify the program type. If the interactive television application determines that some of the programs are analog programs, process 1000 moves to step 1080, where the interactive television application requests a personalized digital transport multiplex containing the analog programs from content source 120 (FIG. 1). In some embodiments, the interactive television application may request a personalized digital transport multiplex containing only the requested digital programs. For example, if the user's equipment has two tuners available, the interactive television application may record a requested analog program with a first tuner, and record the requested digital programs by recording a digital transport multiplex having the requested digital programs with a second tuner.

If the interactive television application instead determines that all of the selected programs are digital programs, process 1000 moves to step 1070. At step 1070, the interactive television application determines whether the digital programs are transmitted in the same digital transport multiplex, such as by examining channel lineup data received from data source 124 (FIG. 1). If the interactive television application determines that the requested digital programs are transmitted in the same digital transport multiplex, process 1000 moves to step 1090 and tunes to the digital transport multiplex to record the programs simultaneously.

If instead the interactive television application determines that the requested digital programs are not all transmitted in an existing digital transport multiplex, process 1000 moves to step 1075. At step 1075, the interactive television application determines whether all of the requested digital programs are transmitted in a number of existing digital transport multiplexes that exceeds the resources of the user's equipment (e.g., if the number of multiplexes exceeds the number of available tuners or bandwidth in the user's equipment). If the interactive television application determines that the user's equipment has enough resources to tune to all of the digital transport multiplexes simultaneously, process 1000 moves to step 1090. If instead the interactive television application determines that the user's equipment does not have enough resources to tune to each of the digital transport multiplexes, process 1000 moves to step 1080. The interactive television application may also proceed to step 1090 in embodiments where it, or the user, selects some of the transport multiplexes for recording in addition to requesting a personalized digital transport multiplex.

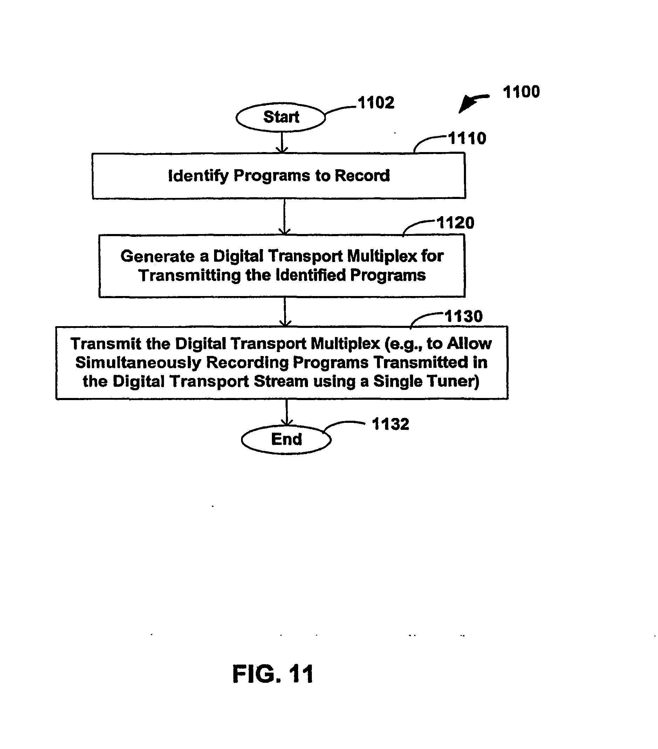

At step 1080, the interactive television application requests a personalized digital transport multiplex having the requested programs from content source 120. In some embodiments, the interactive television application may request a digital transport multiplex for analog programs (e.g., programs from step 1060). In such embodiments, content source 120 may use an encoder to encode the analog program as a digital program for the digital transport multiplex. In some embodiments, analog programs are already available in digital format at content source 120. If the programs are available in digital format to multiplexer 136, content source 120 does not need to encode the programs. Content source 120 may determine, based on any suitable criteria, whether or not to generate a personalized digital transport multiplex to transmit some or all of the requested programs. In some embodiments, content source 120 may transmit some of the requested programs to the user in a personalized digital transport multiplex, and defer (e.g., by time shifting or rate shifting) the other programs requested by the user. An illustrative process for generating a personalized digital transport multiplex is described in more detail in the flow chart of FIG. 11. From step 1080, process 1000 moves to step 1090.

At step 1090, the interactive television application tunes to the digital transport multiplex to simultaneously record the requested programs using a single tuner. The digital transport multiplex may be a personalized digital transport multiplex provided to the user's equipment in response to the request of step 1080. Process 1000 ends at step 1092.

FIG. 11 is a flow chart of an illustrative process for generating a digital transport multiplex. Process 1100 begins at step 1102. At step 1110, content source 120 (FIG. 1) identifies programs to record. Content source 120 may use any suitable criteria for determining which programs to transmit in the digital transport multiplexes. For example, the content source may select the most desirable programs (e.g., the most requested programs, the programs with the most overlapping transmission times, or programs with specific recording priorities) or may identify programs based on system constraints (e.g., bandwidth constraints). At step 1120, the content source generates a digital transport multiplex for transmitting the programs identified at step 1110.
This may include retrieving stored programs, transcoding digital content received from another source, time-shifting content received from another source, and/or encoding analog content. At step 1130, the content source transmits the digital transport multiplex to user equipment 110 (FIG. 1). This may be to, for example, allow simultaneously recording the digital programs transmitted in the digital transport multiplex using a single tuner. For example, an interactive television application implemented on user equipment 110 may tune to the digital transport multiplex and simultaneously record the digital programs transmitted in the digital transport multiplex using a single tuner. Process 1100 ends at step 1132.

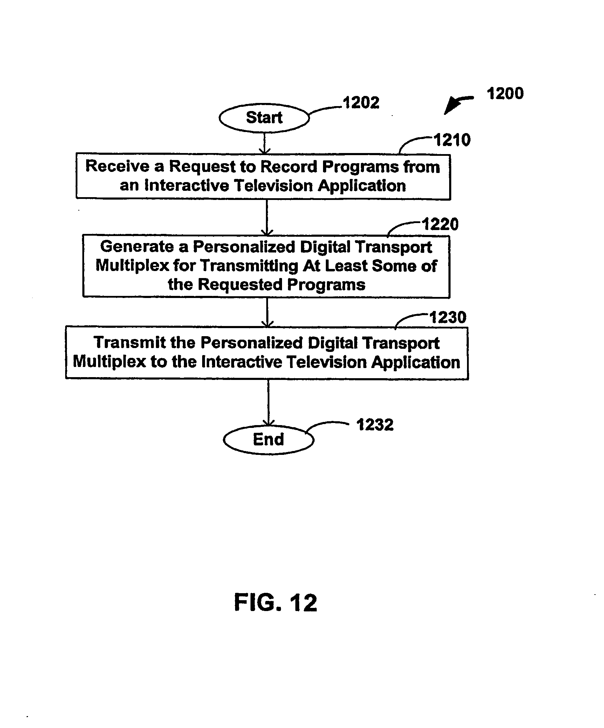

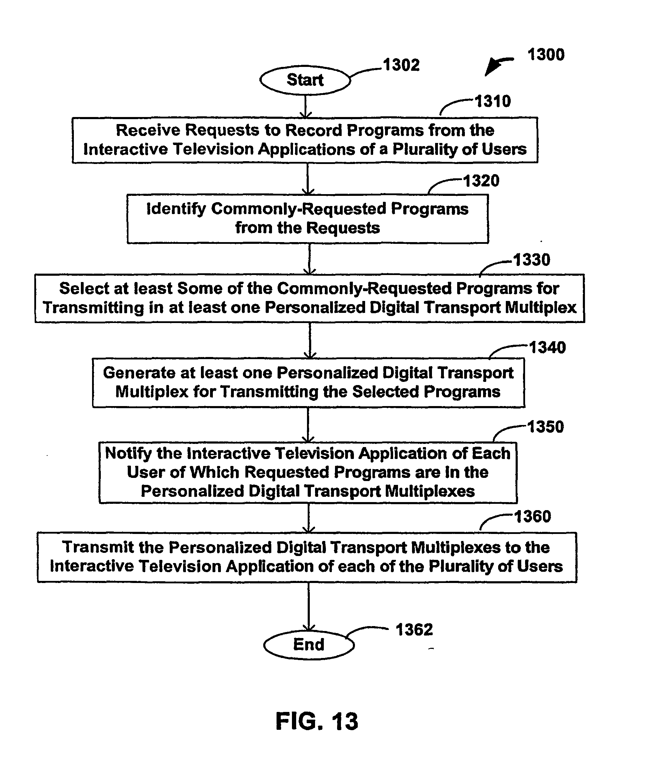

FIG. 12 is a flow chart of an illustrative process for generating a personalized digital transport multiplex based on a user request for programs. Process 1200 begins at step 1202. At step 1210, content source 120 (FIG. 1) receives a request to record digital programs from one or more interactive television applications. At step 1220, content source 120 generates a personalized digital transport multiplex for transmitting at least some of the programs requested by the user at step 1210. An illustrative process for generating a personalized digital transport multiplex is described in more detail in process 1300, shown in FIG. 13.

At step 1230, content source 120 provides the personalized digital transport multiplex to the user. For example, the content source may broadcast the personalized digital transport multiplex to the user. In some embodiments, content source 120 may use any of broadcasts, unicasts and multicasts to transmit the personalized digital transport multiplex to the user. Process 1200 ends at step 1232.

FIG. 13 is a flow chart of an illustrative process for selecting programs to transmit in a personalized digital transport multiplex. Process 1300 begins at step 1302. In some embodiments, most of the steps of process 1300 may take place during step 1220 of process 1200. At step 1310, content source 120 (FIG. 1) receives requests to record programs from the interactive television applications of a plurality of users. At step 1320, content source 120 identifies the commonly-requested programs from the requests received at step 1310. For example, content source 120 may compare the programs and specific transmissions requested by each interactive television application to find repeated requests.

At step 1330, the content source selects at least some of the commonly-requested programs for transmission in at least one personalized digital transport multiplex. In some embodiments, the content source may also select programs that are not commonly-requested for transmission in personalized digital transport multiplexes.

At step 1340, the content source generates at least one digital transport multiplex for transmitting the programs selected at step 1330. The content source may use any suitable algorithm to modulate the carrier signal, multiplex the programs in the digital transport multiplex, and encode the digital programs. At step 1350, the content source notifies the interactive television application of each of the plurality of users which requested programs are transmitted in each of the personalized digital transport multiplexes. The content source may also notify the interactive television application of each of the plurality of users which programs are not transmitted with the personalized digital transport multiplex. In some embodiments, the content source may provide the equipment of each user with a personalized notice addressing only the programs requested by that user's equipment.

At step 1360, the content source transmits one or more personalized digital transport multiplexes to the equipment of each of the plurality of users. The content source may use any combination of broadcasts, unicasts and multicasts to transmit the personalized digital transport multiplexes to the users. Process 1300 ends at step 1362.

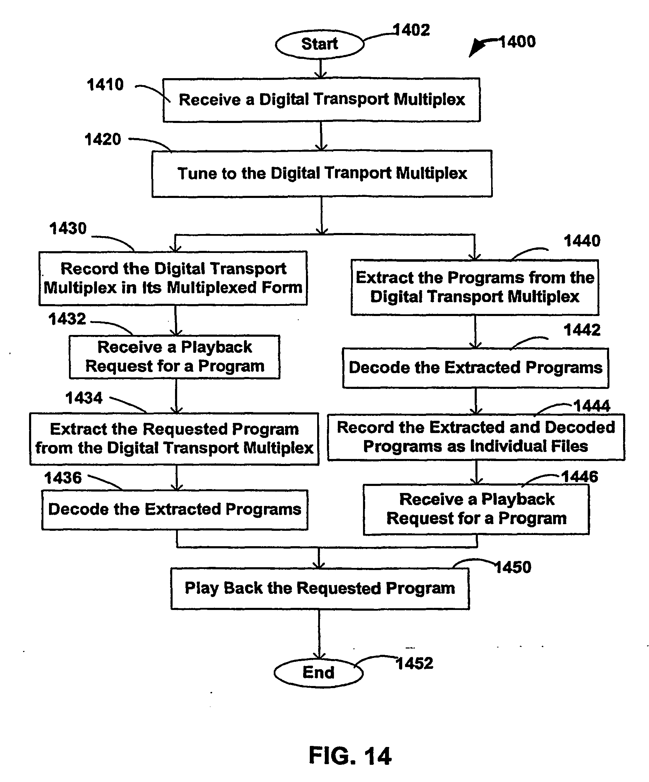

FIG. 14 is a flow chart of an illustrative process for simultaneously recording and playing back a program from a digital transport multiplex.
Process 1400 begins at step 1402. At step 1410, the interactive television application receives a digital transport multiplex from content source 120 (FIG. 1). At least one program requested by the user is transmitted in the digital transport multiplex. At step 1420, the interactive television application tunes to the digital transport multiplex. From step 1420, process 1400 may move to one of two branches.

In the first branch, at step 1430, the interactive television application records the digital transport multiplex in its multiplexed form. At step 1432, the interactive television application receives a playback request for a program recorded from the digital transport multiplex. In response to the playback request, at step 1434, the interactive television application extracts the requested digital program from the recorded digital multiplex. For example, the interactive television application may demultiplex the recorded personalized digital transport multiplex using demultiplexer 126 (FIG. 1). In some embodiments, the interactive television application may extract all of the programs transmitted in the personalized digital transport multiplex. At step 1436, the interactive television application decodes the digital program extracted at step 1434. For example, the interactive television application may decode the extracted programs using decoder 128 (FIG. 1). In some embodiments, the interactive television application may decode all of the programs extracted from the personalized digital transport multiplex.

In the second branch, at step 1440, the interactive television application extracts the programs transmitted in the digital transport multiplex upon receipt of the multiplex. For example, the interactive television application may demultiplex the personalized digital transport multiplex using demultiplexer 126 (which may include a PID filter, as found in typical MPEG-2 decoders). At step 1442, the interactive television application decodes the program extracted from the digital transport multiplex at step 1440. For example, the interactive television application may decode the extracted programs using decoder 128. At step 1444, the interactive television application records the extracted and decoded programs as individual files. At step 1446, the interactive television application receives a playback request for one of the programs recorded as an individual file at step 1444.

In some examples, the interactive television application may instead extract digital programs transmitted in a personalized digital transport multiplex as a background task after the digital transport multiplex is recorded, and not in response to receiving a user request to play back a program recorded from the digital transport multiplex or upon receiving the digital transport multiplex.

At step 1450, the interactive television application plays back the extracted program, for example by directing display device 112 to play back the program. Process 1400 ends at step 1452.

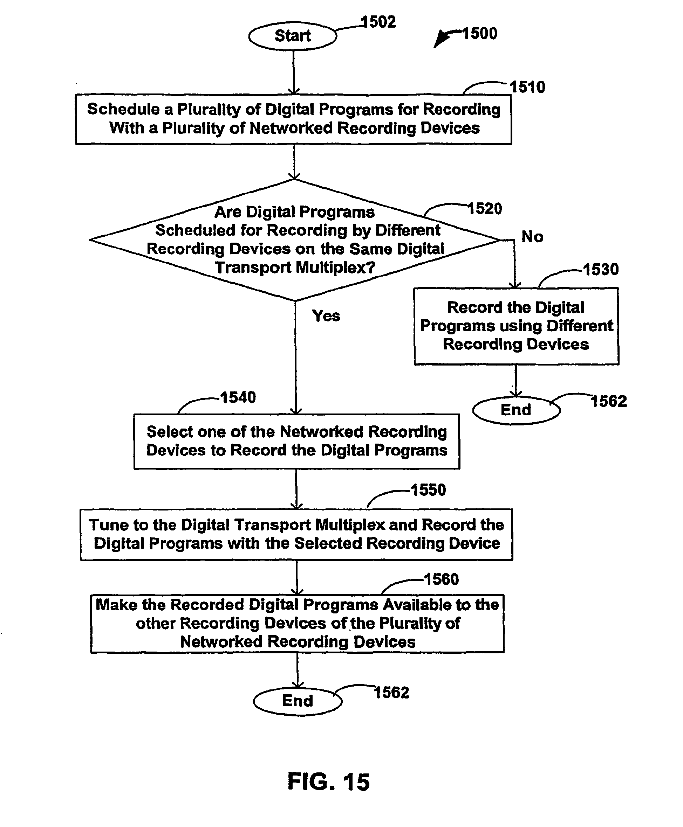

FIG. 15 is a flow chart of an illustrative process for simultaneously recording and playing back a program from a digital transport multiplex using multiple networked recording devices. Process 1500 begins at step 1502. At step 1510, the interactive television application schedules digital programs for recording with a plurality of networked recording devices. For example, different users instruct the interactive television application to schedule digital programs for recording with different networked recording devices. In some examples, a plurality of interactive television applications may schedule for recording digital programs selected by a plurality of networked users' equipment each having a recording device. For example, a plurality of users may instruct the interactive television applications of a plurality of networked users' equipment to record digital programs with the plurality of networked users' equipment. The networked recording devices or users' equipment may be connected using any suitable relationship including, for example, master-slave, peer-to-peer, or any other suitable relationship.

At step 1520, the interactive television application or applications may determine whether digital programs scheduled for recording by different recording devices or users' equipment are on the same digital transport multiplex. If the interactive television application or applications determine that the digital programs are on different digital transport multiplexes, process 1500 goes to step 1530. At step 1530, the digital programs are recorded using different networked recording devices or networked users' equipment. Process 1500 then ends at step 1562.

If instead the interactive television application or applications determine that the digital programs are on the same digital transport multiplex, process 1500 goes to step 1540. At step 1540, the interactive television application or applications select one of the networked recording devices, or the recording device of one of the networked users' equipment, to record the digital programs. The interactive television application or applications may use any suitable criteria for determining which recording device to select. Suitable criteria may include, for example, the number of tuners of each recording device, the space available at each recording device, which programs were requested for recording with each recording device, or any other suitable criteria.

At step 1550, the interactive television application or applications direct the selected recording device to tune to the digital transport multiplex and record the digital programs. At step 1560, the interactive television application or applications direct the selected recording device to make the recorded digital programs available to the other recording devices or users' equipment in the network. For example, a tuner on a first user's equipment (e.g., a DVR) is tuned to a multiplex containing one or more services and one or more of the services within the multiplex are recorded with a user's equipment other than the first user's equipment (e.g., on the hard drive of a DVR other than the first DVR). For example, the interactive television application or applications may direct the selected recording device to transfer the recorded programs to other recording devices or users' equipment (e.g., transfer a digital program to the recording device or user's equipment used to schedule the digital program for recording). As another example, the interactive television application or applications may direct the selected recording device to play back the recorded programs over the network on another recording device or user's equipment. Process 1500 ends at step 1562.

The above described examples of the present invention are presented for purposes of illustration and not of limitation, and the present invention is limited only by the claims which follow.

## Claims

1. A method for providing digital transport multiplexes having requested programs, the method comprising:
receiving, at a system for providing digital transport multiplexes and from interactive television applications associated with a plurality of users, requests to access groups of two or more concurrently broadcast digital programs from a single digital transport multiplex;
identifying, by the system, frequently-requested groups from among the requested groups of two or more concurrently broadcast digital programs;
generating, by the system, in response to the identifying, at least one personalized digital transport multiplex that includes the two or more concurrently broadcast digital programs associated with at least one of the identified frequently-requested groups of two or more digital programs; and
broadcasting the personalized digital transport multiplex from the system to the interactive television applications associated with the plurality of users; the method further comprising transmitting, from the system, revised channel map information to the interactive television applications, the channel map information associated with the personalized digital transport multiplex.

2. A system for providing digital transport multiplexes having requested programs, the system comprising communications circuitry and control circuitry, the control circuitry configured to:
receive, from interactive television applications associated with a plurality of users, requests to access groups of two or more concurrently broadcast digital programs from a single digital transport multiplex;
identify frequently-requested groups from among the requested groups of two or more concurrently broadcast digital programs;
generate, in response to the identifying, at least one personalized digital transport multiplex that includes the two or more digital programs associated with at least one of the identified frequently-requested groups of two or more concurrently broadcast digital programs; and
direct the communications circuitry to broadcast the personalized digital transport multiplex to the interactive television applications of the plurality of users; wherein the control circuitry is further configured to transmit revised channel map information to the interactive television applications, the channel map information associated with the personalized digital transport multiplex.

## Patentansprüche

1. Verfahren zum Vorsehen von digitalen
Transportmultiplexen mit angeforderten Programmen, welches Verfahren umfasst:
Empfangen von Anforderungen für den Zugriff auf Gruppen von zwei oder mehr gleichzeitig übertragenen digitalen Programmen von einem einzigen digitalen Transportmultiplex an einem System zum Vorsehen von digitalen Transportmultiplexen und von einer Mehrzahl von Nutzern zugeordneten interaktiven Fernsehanwendungen;
Identifizieren von häufig angeforderten Gruppen unter den angeforderten Gruppen von zwei oder mehr gleichzeitig übertragenen digitalen Programmen durch das System;
Generieren von mindestens einem personalisierten digitalen Transportmultiplex, der die zwei oder mehr gleichzeitig übertragenen digitalen Programme enthält, welche mindestens einer der identifizierten häufig angeforderten Gruppen von zwei oder mehr digitalen Programmen zugeordnet sind, durch das System als Reaktion auf das Identifizieren; und
Übertragen des personalisierten digitalen Transportmultiplex von dem System zu den der Mehrzahl von Nutzern zugeordneten interaktiven Fernsehanwendungen; wobei das Verfahren weiters das Senden von überarbeiteten Kanalplaninformationen an die interaktiven Fernsehanwendungen von dem System umfasst, welche Kanalplaninformationen dem personalisierten digitalen Transportmultiplex zugeordnet sind.

2. System zum Vorsehen von digitalen Transportmultiplexen mit angeforderten Programmen, welches System ein Übertragungsschaltsystem und ein Steuerschaltsystem aufweist, wobei das Steuerschaltsystem konfiguriert ist, um
Anforderungen für den Zugriff auf Gruppen von zwei oder mehr gleichzeitig übertragenen digitalen Programmen von einem einzigen digitalen Transportmultiplex von einer Mehrzahl von Nutzern zugeordneten interaktiven Fernsehanwendungen zu empfangen;
häufig angeforderte Gruppen unter den angeforderten Gruppen von zwei oder mehr gleichzeitig übertragenen digitalen Programmen zu identifizieren;
mindestens einen personalisierten digitalen Transportmultiplex, der die zwei oder mehr digitalen Programme enthält, welche mindestens einer der identifizierten häufig angeforderten Gruppen von zwei oder mehr gleichzeitig übertragenen digitalen Programmen zugeordnet sind, als Reaktion auf das Identifizieren zu generieren; und
das Kommunikationsschaltsystem anzuweisen, den personalisierten digitalen Transportmultiplex an die der Mehrzahl von Nutzern zugeordneten interaktiven Fernsehanwendungen zu übertragen; wobei das Steuerschaltsystem weiters konfiguriert ist, um überarbeitete Kanalplaninformationen an die interaktiven Fernsehanwendungen zu senden, welche Kanalplaninformationen dem personalisierten digitalen Transportmultiplex zugeordnet sind.

## Revendications

1. Procédé pour fournir des multiplex de transport numériques possédant des programmes demandés, le procédé comprenant :
la réception, dans un système pour fournir des multiplex de transport numériques et à partir d'applications de télévision interactive associées à une pluralité d'utilisateurs, de demandes pour accéder à des groupes de deux, ou plus, programmes numériques diffusés simultanément à partir d'un seul multiplex de transport numérique ;
l'identification, par le système, de groupes fréquemment demandés parmi les groupes demandés de deux, ou plus, programmes numériques diffusés simultanément ;
la génération, par le système, en réponse à l'identification, d'au moins un multiplex de transport numérique personnalisé qui comprend les deux, ou plus, programmes numériques diffusés simultanément associés à au moins un des groupes fréquemment demandés identifiés de deux, ou plus, programmes numériques ; et
la diffusion du multiplex de transport numérique personnalisé du système aux applications de télévision interactive associées à la pluralité d'utilisateurs ; le procédé comprenant en outre la transmission, à partir du système, d'informations de mappe de chaînes révisées aux applications de télévision interactive, les informations de mappe de chaînes étant associées au multiplex de transport numérique personnalisé.

2. Système pour fournir des multiplex de transport numériques possédant des programmes demandés, le système comprenant une circuiterie de communication et une circuiterie de commande, la circuiterie de commande étant configurée pour :
recevoir, à partir d'applications de télévision interactive associées à une pluralité d'utilisateurs, des demandes pour accéder à des groupes de deux, ou plus, programmes numériques diffusés simultanément à partir d'un seul multiplex de transport numérique ;
identifier des groupes fréquemment demandés parmi les groupes demandés de deux, ou plus, programmes numériques diffusés simultanément ;
générer, en réponse à l'identification, au moins un multiplex de transport numérique personnalisé qui comprend les deux, ou plus, programmes numériques associés à au moins un des groupes fréquemment demandés identifiés de deux, ou plus, programmes numériques diffusés simultanément ; et
donner l'ordre à la circuiterie de communication de diffuser le multiplex de transport numérique personnalisé aux applications de télévision interactive de la pluralité d'utilisateurs ; dans lequel la circuiterie de commande est en outre configurée pour transmettre des informations de mappe de chaînes révisées aux applications de télévision interactive, les informations de mappe de chaînes étant associées au multiplex de transport numérique personnalisé.
